Europäisches Patentamt

European Patent Office

Office européen des brevets

(19)

(11) Veröffentlichungsnummer: **0 135 205**
**B1**

(12) **EUROPÄISCHE PATENTSCHRIFT**

(45) Veröffentlichungstag der Patentschrift:
**13.07.88**

(51) Int. Cl.⁴: **G 01 N 1/24**

(21) Anmeldenummer: **84200870.8**

(22) Anmeldetag: **15.06.84**

(54) **Wassergekühlte Sonde zur Gasentnahme aus staubbeladenen Heissgasen.**

(30) Priorität: **28.07.83 DE 3327180**

(43) Veröffentlichungstag der Anmeldung:
**27.03.85 Patentblatt 85/13**

(45) Bekanntmachung des Hinweises auf die Patenterteilung:
**13.07.88 Patentblatt 88/28**

(84) Benannte Vertragsstaaten:
**AT BE CH FR GB IT LI LU NL SE**

(56) Entgegenhaltungen:
**FR - A - 2 052 084**
**US - A - 3 382 721**
**US - A - 3 459 047**
**US - A - 3 486 382**
**US - A - 3 559 491**
**US - A - 3 680 388**

(73) Patentinhaber: **Verein Deutscher Zementwerke e. V.,
D-4000 Düsseldorf 30 (DE)**

(72) Erfinder: **Gardeik, Hans Otto, Dr.-Ing., Kuckelter Weg 21,
D-4030 Ratingen (DE)**
Erfinder: **Lessing, Antonius, Am Stirkenbend 8,
D-4052 Korchenbroich 2 (DE)**
Erfinder: **Rosemann, Holger, Dipl.-Ing.,
Kreitenstrasse 12, D-4000 Düsseldorf (DE)**

(74) Vertreter: **Ackmann, Günther, Dr.-Ing.,
Claubergstrasse 24 Postfach 10 09 22,
D-4100 Duisburg 1 (DE)**

## Beschreibung

Die Erfindung betrifft eine wassergekühlte Sonde zur Gasentnahme aus einem staubbeladenen Heissgasstrom, bestehend aus einem koaxial in einem rohrförmigen, das Kühlwasser enthaltenden Mantel angeordneten, an seinem Stirnende verschlossenen Saugrohr und seitlich am Saugrohr angebrachten, radial durch den Mantel führenden Ansaugstutzen, deren Ansaugöffnungen an Stellen im Mantel angeordnet sind, die im Schatten des Heissgasstromes liegen.

In Zementdrehöfen oder ähnlichen Ofenanlagen ist eine Gasentnahme für die Analyse des den Ofen durchströmenden Heissgases erforderlich, das in der Regel einen sehr hohen Staubanteil enthält. Erwünscht ist jedoch eine vom Staub freie Gasprobe in ihrer unverfälschten Zusammensetzung. In Abhängigkeit von der an der Messstelle herrschenden Temperatur des Heissgases und dem Staubanteil finden verschiedenartig ausgebildete Sonden Verwendung. Bei Temperaturen unter 400 °C, wie sie beispielsweise in den Abgasen von Nassdrehöfen vorliegen, wird die Sonde wassergekühlt, wobei um das Saugrohr herum mit Abstand ein Kühlmantel angeordnet ist und der gebildete Hohlraum von Kühlwasser durchströmt wird. Die Ansaugöffnung wird durch das offene Ende des Saugrohres gebildet, so dass ein axialer Gaseintritt stattfindet, bei dem erhebliche Staubmengen mitgeführt werden, die häufig zu Verstopfungen führen. Um ein Mitreissen grober Staubteilchen in das Probegas zu verringern, ist ein am Ansaugende des Saugrohres vor dem Kühlmantel angebrachter tropfenförmig gestalteter Blechkörper bekannt, der den staubbeladenen Gasstrom an seiner Oberfläche beschleunigt. Bei dieser Ausführung werden die leichteren Gasteilchen angesaugt, während die schweren Staubteilchen vorbeiströmen und nicht in das Saugrohr gelangen. Mitgerissene feinste Staubteilchen werden aus dem Probegasstrom herausgefiltert. Die mit einem tropfenförmigen Blechkörper ausgestattete Sonde ist jedoch nicht für höhere Gastemperaturen geeignet. So können die Gastemperaturen bei Trockendrehöfen u.dgl. bis zu 1300 °C betragen; auch liegt der Staubanteil in Trockendrehöfen meist noch höher. Hierfür werden in der Regel Sonden aus keramischen Werkstoffen eingesetzt, bei denen jedoch ein axialer Gaseintritt mit einem hohen Staubanteil stattfindet. Der mitgerissene Staub wird anschliessend aus dem Probegasstrom herausgefiltert oder mittels einer Zentrifuge abgeschieden.

Zur Probeentnahme heisser Gase aus Glasschmelzöfen ist aus der US-A-3 680 388 eine wassergekühlte Sonde bekannt, welche die im Oberbegriff des Anspruchs 1 aufgeführten Merkmale aufweist und bei der zentrisch im Saugrohr ein mit einer Injektordüse ausgerüstetes Bedampfungsrohr angeordnet ist, so dass das heisse Gas durch die Injektorwirkung von eingeblasenem Wasserdampf entnommen wird. Die Wasserdampfeinwirkung auf das Heissgas führt jedoch zu einer Verfälschung der Gaszusammensetzung und ist insbesondere zur genauen Bestimmung von Oxiden des Kohlenstoffs, Stickstoffs und Schwefels ungeeignet. Auch muss das Wasserdampf-Gasgemisch durch einen Kondensator geleitet werden. Für staubbeladene Heissgasströme ist diese Sonde ungeeignet, da Staubteilchen von der Sonde erfasst werden, auch wenn die Längsachsen der diametral gegenüberliegenden Ansaugstutzen quer zur Strömungsrichtung eines Heissgasstromes liegen würden; die mitgerissenen Staubteilchen würden schon nach kurzer Zeit die Sonde und den Kondensator verstopfen. Ähnliche Schwierigkeiten würden auch bei einer Sonde zur Probeentnahme von Koksofengasen nach der US-A-3 459 047 entstehen, bei der ein Entnahmerohr seitlich in einer Reihe angeordnet kleine Ansaugöffnungen besitzt und ein mit Abstand um das Entnahmerohr herum liegender Wärmetauschermantel vorgesehen ist, der einen diametral zu den Ansaugöffnungen verlaufenden Ansaugschlitz aufweist. Da das Entnahmerohr gar nicht gekühlt wird, ist die Sonde schon deshalb für höhere Gastemperaturen nicht geeignet.

Schliesslich ist in der US-A-3 382 721 eine Saugsonde zur Entnahme von Abgasen aus Auspuffrohren von Verbrennungsmotoren beschrieben, bei der das gegen die Strömungsrichtung weisende Ende des Saugrohres durch eine konische Kappe verschlossen und der Mantel des Saugrohres mit Ansaugschlitzen versehen ist, die schräg in Strömungsrichtung verlaufen, so dass ein Einströmen von Fremdteilchen und Tropfen durch die Schlitze verringert wird. Diese Saugsonde besitzt jedoch keine Wasserkühleinrichtung und ist daher zur Probeentnahme aus Heissgasen ungeeignet.

Demgegenüber liegt der Erfindung die Aufgabe zugrunde, eine wassergekühlte Sonde der gattungsgemässen Art derart auszubilden, dass eine möglichst staubfreie Gasentnahme möglich ist und bei einem einfachen Aufbau eine bestmögliche Kühlung des Sondenkopfes erreicht wird, wobei sie entweder seitlich oder stirnseitig in ein Produkten- oder Gasrohr eingeführt werden kann.

Diese Aufgabe wird erfindungsgemäss dadurch gelöst, dass bei einer seitlich angeströmten rohrförmigen Sonde die Achsen der Ansaugstutzen auf der der Gasströmung abgewandten Seite liegen und einen stumpfen Winkel bilden, während bei einer koaxial angeströmten Sonde der rohrförmige Mantel im Bereich des Sondenkopfes doppelkegelförmig sich zu beiden Seiten hin verjüngend ausgebildet ist und die Ansaugstutzen in dem in Strömungsrichtung sich verjüngenden Teil des Mantels angeordnet sind.

Diese Ausbildungen haben den Vorteil, dass auch bei einer wassergekühlten Sonde die Staubteilchen wegen ihrer hohen Massenträgheit der Umlenkung des angesaugten Gases nicht folgen können, sondern gewissermassen an den Ansaugöffnungen vorbeifliegen. Zweckmässig liegen die Öffnungen der Ansaugstutzen in einem Bereich, wo eine Grenzschichtablösung stattfindet und möglichst vor dem sich anschliessenden Turbulenzbereich. Bei der seitlich angeströmten rohrförmigen Sonde liegt die der Gasströmung abgewandte Hälfte im Schatten des Heissgasstromes. Durch die stumpfwinklige Lage wird erreicht, dass die Ansaugöffnungen im Bereich der Grenzschichtablösung liegen. Wird die Sonde hingegen koaxial angeströmt, entsprechende Messstellen befinden sich beispielsweise an den beiden Enden eines Zementdrehofens, so liegt die Schattenseite mit dem Grenzschichtablösungsbereich, in Strömungsrichtung gesehen, hinter dem «Äquator» des Doppelkegels. Es wird deshalb ein im wesentlichen staubfreies Gas durch das Saugrohr abgesaugt. Die seitliche Anordnung der Ansaugstutzen am Saugrohr schafft weiterhin die Möglichkeit, die Sonde für eine Wasserkühlung bis zur Sondenspitze auszubilden, indem der Mantel entsprechend vorgezogen wird. Durch Einstellung einer geeigneten Temperatur des Kühlwassers oder eines anderen Kühlmittels lässt sich eine Kondenswasserbildung in dem Saugrohr ausschliessen, so dass etwaige Kondensationsprodukte, z.B. Alkaliverbindungen, unter Vermeidung von Ansatzbildungen im trockenen Zustand durch das Saugrohr strömen. Die Anzahl der Ansaugstutzen kann beliebig sein, vorzugsweise ist der doppelkegelförmige Sondenkopf mit zwei einander diametral gegenüberliegenden Ansaugstutzen versehen; diese können aber auch, um den Umlenkungseffekt zu erhöhen, von der Ansaugöffnung schräg nach vorn in das ebenfalls etwas nach vorn gezogene Saugrohr münden.

Zwei Ausführungsbeispiele sind in der Zeichnung dargestellt; es zeigt:

Fig. 1 den Kopf einer Sonde zum seitlichen Einführen in ein Gasrohr,

Fig. 2 den Gegenstand der Fig. 1 in einem mittleren Querschnitt im Bereich der Ansaugstutzen,

Fig. 3 den Kopf einer Sonde zum stirnseitigen Einführen in ein Gasrohr und

Fig. 4 den Gegenstand der Fig. 3 in einem Querschnitt nach Linie A–B.

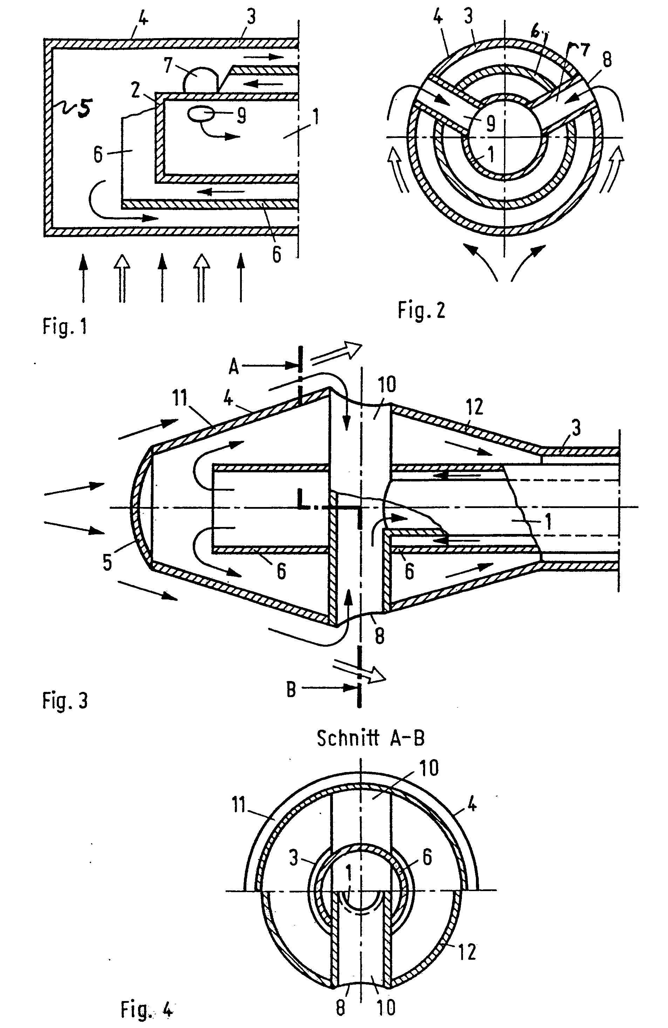

Bei der in den Fig. 1 und 2 gezeigten Ausführungsform hat ein Saugrohr 1 ein verschlossenes Stirnende 2. Mit Abstand liegt um das Saugrohr 1 herum ein rohrförmiger Mantel 3, der mit einer Stirnwand 5 versehen ist. Zwischen dem Saugrohr 1 und dem Mantel 3 ist ein Führungsrohr 6 angeordnet, welches das Kühlwasser zum Sondenkopf 4 hin- und zum anderen Rohrende zurücklenkt. Am Ende des Saugrohres 1 sind zwei Ansaugstutzen 7 radial angebracht, deren Achsen einen stumpfen Winkel einschliessen. Diese ragen durch das Führungsrohr 6 und den Mantel 3, wobei ihre Ansaugöffnungen 8 im Bereich der Grenzschichtablösung liegen, wenn der Sondenkopf 4 von der gegenüberliegenden Seite angeströmt wird. Die Ansaugstutzen 7 münden in je eine Öffnung 9 des Saugrohres 1.

Die in den Fig. 3 und 4 gezeigte Ausführungsform für ein stirnseitiges Einsetzen in ein Gasrohr, z.B. an Umlenkstellen, weist am Ende des Saugrohres zwei Ansaugstutzen 10 auf, die etwa T-förmig angesetzt sind. Der Mantel 3 ist im Bereich des Sondenkopfes 4 doppelkegelförmig ausgebildet, indem zwei Kegelteile 11, 12 zusammengeschweisst sind. Am vorderen Kegelteil 11 ist eine strömungsgünstige Stirnwand 5 angebracht. Die Ansaugstutzen 10 münden kurz hinter dem «Äquator» des Doppelkegels in das sich konisch verjüngende Kegelteil 12.

In der Zeichnung versinnbildlichen die Pfeile mit einem einfachen Strich die Strömungsrichtung des Heissgases, während durch die Pfeile mit Doppelstrich die Strömungsrichtung der Staubteilchen angedeutet ist.

**Patentansprüche**

1. Wassergekühlte Sonde zur Gasentnahme aus einem staubbeladenen Heissgasstrom, bestehend aus einem koaxial in einem rohrförmigen, das Kühlwasser enthaltenden Mantel (3) angeordneten, an seinem Stirnende verschlossenen Saugrohr (2) und seitlich am Saugrohr (2) angebrachten, radial durch den Mantel (3) führenden Ansaugstutzen (7, 10), deren Ansaugöffnungen (8) an Stellen im Mantel (3) angeordnet sind, die im Schatten des Heissgasstromes liegen, dadurch gekennzeichnet, dass bei einer seitlich angeströmten rohrförmigen Sonde die Achsen der Ansaugstutzen (7) auf der der Gasströmung abgewandten Seite liegen und einen stumpfen Winkel bilden.

2. Wassergekühlte Sonde zur Gasentnahme aus einem staubbeladenen Heissgasstrom, bestehend aus einem koaxial in einem rohrförmigen, das Kühlwasser enthaltenden Mantel (3) angeordneten, an seinem Stirnende verschlossenen Saugrohr (2) und seitlich am Saugrohr (2) angebrachten, radial durch den Mantel (3) führenden Ansaugstutzen (7, 10), deren Ansaugöffnungen (8) an Stellen im Mantel (3) angeordnet sind, die im Schatten des Heissgasstromes liegen, dadurch gekennzeichnet, dass bei einer koaxial angeströmten Sonde der rohrförmige Mantel (3) im Bereich des Sondenkopfes (4) doppelkegelförmig sich zu beiden Seiten hin verjüngend ausgebildet ist und die Ansaugstutzen (10) in dem in Strömungsrichtung sich verjüngenden Teil (12) des Mantels (3) angeordnet sind.

**Claims**

1. A water-cooled probe for removal of gas from a dust-laden stream of hot gas, consisting of a suction tube (2) closed at one end face and disposed coaxially in a tubular jacket (3) containing the cooling water, and intake spigots (7, 10) which are disposed laterally on the suction tube (2) and extend radially through the jacket (3), the intake ports (8) thereof being disposed at places in the jacket (3) which are situated in the lee of the stream of hot gas, characterised in that in the case of a tubular probe subjected to lateral flow the axes of the intake spigots (7) are situated on the side remote from the gas flow and form an obtuse angle.

2. A water-cooled probe for removal of gas from a dust-laden stream of hot gas, consisting of a suction tube (2) closed at its end face and disposed coaxially in a tubular jacket (3) containing the cooling water, and intake spigots (7, 10) which are disposed laterally on the suction tube (2) and extend radially through the jacket (3), the intake ports (8) thereof being disposed at places in the jacket (3) which are situated in the lee of the stream of hot gas, characterised in that in the case of a probe subjected to coaxial flow, the tubular jacket (3) is constructed to be double conical in the area of the probe heat (4), so as to taper on both sides, and the intake spigots (10) are disposed in that part (12) of the jacket (3) which tapers in the direction of flow.

**Revendications**

1. Sonde à refroidissement par de l'eau et destinée à prélever du gaz d'un courant de gaz chauds chargés de poussières, constituée d'un tuyau d'aspiration (2), fermé à son extrémité frontale et disposé coaxialement dans une enveloppe (3) tubulaire contenant l'eau de refroidissement, et d'ajutages d'aspiration (7, 10), montés latéralement sur le tuyau d'aspiration (2), traversant radialement l'enveloppe (3) et dont les orifices d'aspiration (8) sont disposés dans l'enveloppe (3) en des emplacements qui sont à l'abri du courant de gaz chaud, caractérisé en ce que, pour une sonde tubulaire dans laquelle le courant afflue latéralement, les axes des ajustages d'aspiration (7) sont du côté éloigné du courant gazeux et font un angle obtus.

2. Sonde à refroidissement par de l'eau et destinée à prélever du gaz d'un courant de gaz chauds chargés de poussières, constituée d'un tuyau d'aspiration (2), fermé à son extrémité frontale et disposé coaxialement dans une enveloppe (3) tubulaire contenant l'eau de refroidissement, et d'ajutages d'aspiration (7, 10), montés latéralement sur le tuyau d'aspiration (2), traversant radialement l'enveloppe (3) et dont les orifices d'aspiration (8) sont disposés dans l'enveloppe (3) en des emplacements qui sont à l'abri du courant de gaz chaud, caractérisé en ce que, pour une sonde dans laquelle le courant afflue axialement, l'enveloppe (3) tubulaire est constituée, dans la région de la tête de la sonde (4), en forme de cône double se rétrécissant des deux côtés et les ajutages d'aspiration (10) sont disposés dans la partie (12) de l'enveloppe (3), qui se rétrécit dans le sens du courant.

0 135 205

Fig. 1

Fig. 2

Fig. 3

Schnitt A-B

Fig. 4